# EUROPEAN PATENT SPECIFICATION

(11) **EP 3 534 221 B1**
(45) Date of publication and mention of the grant of the patent: **18.03.2026**
(21) Application number: 17865768.0
(22) Date of filing: 30.10.2017
(51) Int. Cl.: G03H 1/02, B32B 7/02, B42D 25/24, B42D 25/328, G02B 5/18, G03H 1/26, B42D 25/29, B42D 25/324, G02B 27/42

(54) **OPTICAL ELEMENT, LAMINATE BODY, AND BOOK FORM**
OPTISCHES ELEMENT, SCHICHTKÖRPER UND BUCHFORM
ÉLÉMENT OPTIQUE, CORPS STRATIFIÉ ET FORME DE LIVRE

(30) Priority: 31.10.2016 JP 2016213615
(43) Date of publication of application: 04.09.2019
(73) Proprietor: Dai Nippon Printing Co., Ltd., Tokyo 162-8001 (JP)
(72) Inventor: MOTOI Takumi, Tokyo 162-8001 (JP); AOYAMA Yuko, Tokyo 162-8001 (JP); SATO Jun, Tokyo 162-8001 (JP)
(74) Representative: Müller-Boré & Partner Patentanwälte PartG mbB
(86) International application number: PCT/JP2017/039110
(87) International publication number: WO 2018/079773

(56) References cited:
- JP-A- 2005 189 168
- JP-A- 2007 203 568
- JP-A- 2007 203 568
- JP-A- 2012 071 477
- JP-A- 2016 510 431
- US-A1- 2010 060 989
- US-A1- 2015 109 647
- US-A1- 2015 352 887

## Description

### TECHNICAL FIELD

The present invention relates to an optical element, a laminate, and a booklet capable of optically functioning.

### BACKGROUND ART

In the related art, there is a security document provided with a light diffractable hologram or the like (for example, Patent Document 1). For a medium like such a security document, an improvement in security has been required at all times.

Patent Document 2 describes a display body composed of a surface relief-type diffraction gratings or holograms. The display body is a plate-like body in which a plurality of planar light-guide bodies are laminated together. The frontside planar part and/or the backside planar part of each light guide body is equipped with a surface relief-type diffraction grating or hologram. Each surface relief-type diffraction grating or hologram displays an image having a particular color when illuminated by light having a predetermined wavelength guided through the light-guide body associated with the particular surface relief-type diffraction grating or hologram. The display displays a multi-color image, which is composed of the sum of the colored images reproduced by each of the surface relief-type diffraction gratings or holograms.

Patent Document 3: describes a security device including a transparent layer having a first optically variable effect generating relief structure formed in a surface thereof; a reflection enhancing body extending over the first relief structure and following the contour of the first relief on a first side of the reflection enhancing body; and a second optically variable effect generating relief structure formed in a second side of the reflection enhancing body. The reflection enhancing body includes at least a first reflection enhancing layer defining the first and/or second sides of the reflection enhancing body and the first reflection enhancing layer includes a binder having reflective particles dispersed therein. When the device is viewed through the transparent layer, the optically variable effect of the first relief structure is visible and when the device is viewed from the other side, the optically variable effect of the second relief structure is visible.

Patent Document 1: Japanese Patent No. 5559354
Patent Document 2: Japanese patent application JP 2007203568
Patent Document 3: US 2015/0352887 A1

### DISCLOSURE OF THE INVENTION

### Problems to be Solved by the Invention

An object of the present invention is to provide an optical element, a laminate, and a booklet having improved security.

### Means for Solving the Problems

The present invention solves the problem by the providing an optical element, a laminate, and a booklet as defined in the claims. In order to facilitate understanding, reference numerals corresponding to embodiments of the present invention are given for the description, but the present invention is not limited thereto. In addition, configurations described with reference numerals may be modified as appropriate, and at least a part thereof may be replaced by another configuration.

The invention is directed to an optical device as recited in appended independent claim 1. Other aspects of the invention are recited in the appended dependent claims.

### Effects of the Invention

According to the present invention, an optical element, a laminate, and a booklet having improved security can be provided.

### BRIEF DESCRIPTION OF THE DRAWINGS

Fig. 1A is a view illustrating a card 1 of a first embodiment.
Fig. 1B is a view illustrating the card 1 of the first embodiment.
Fig. 2 is an enlarged view of the inside of the two-dot chain line (part indicated by arrow 2) of Fig. 1B.
Fig. 3A is a sectional view illustrating a method of manufacturing the card 1 of the first embodiment.
Fig. 3B is a sectional view illustrating the method of manufacturing the card 1 of the first embodiment.
Fig. 4 is a sectional view (view corresponding to Fig. 2) illustrating a card 201 of a second embodiment.
Fig. 5A is a view (view corresponding to Fig. 1A) illustrating a card 301 of a third embodiment.
Fig. 5B is a view (view corresponding to Fig. 1B) illustrating the card 301 of the third embodiment.

### PREFERRED MODE FOR CARRYING OUT THE INVENTION

### (Embodiments)

Hereinafter, embodiments of the present invention will be described with reference to the drawings and the like.

### (First Embodiment)

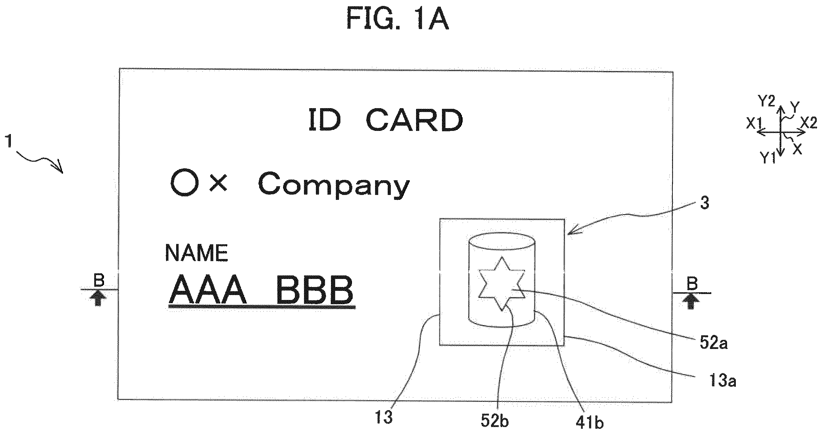

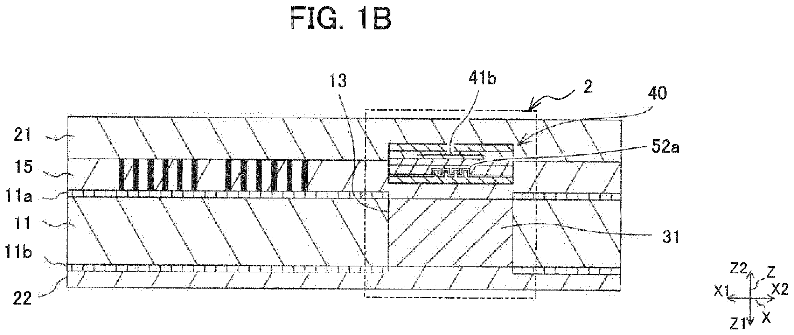

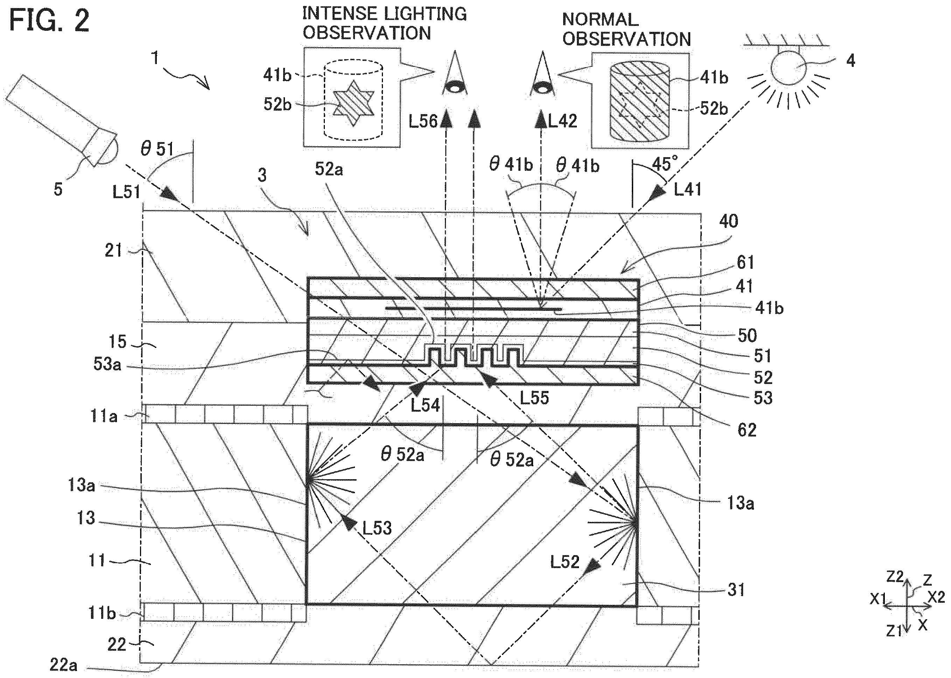

Figs. 1A and 1B are views illustrating a card 1 of a first embodiment. Fig. 1A is a view of the upper surface of the card 1 as viewed from the normal direction (lamination direction of layers forming the card 1). In Fig. 1A, for convenience sake, a hologram image 41b and a grating shape 52b are shown by solid lines, but as will be described later, the card 1 is configured so that both cannot be simultaneously visually recognized. Fig. 1B is a sectional view taken along line B-B of Fig. 1A. Fig. 2 is an enlarged view of the inside of the two-dot chain line (part indicated by arrow 2) of Fig. 1B. In order to facilitate description and understanding, an XYZ orthogonal coordinate system is provided in the embodiments and the drawings. This coordinate system represents a left-right direction X (left side X1 and right side X2), a longitudinal direction Y (lower side Y1 and upper side Y2), and a thickness direction Z with reference to the state of Fig. 1A. The thickness of each configuration is exaggeratedly illustrated as appropriate. The direction of the thickness direction Z (lower side Z1 and upper side Z2) is determined for convenience of description and does not limit the front and back sides of the card 1.

The card 1 (laminate) is used as, for example, an ID card. In the embodiment, the concept of the card is not limited to the ID card or the like, and widely includes a medium having a laminated configuration of the embodiment. For example, the card 1 includes a card used for a data page or the like of a passport by providing a non-contact communication IC chip, a loop antenna, a hinge, and the like. In this case, the external shape of the card 1 may be matched with the size of the passport or the like. Furthermore, the laminate may be used, for example, for a cash voucher and a ticket.

### [Configuration of Card 1]

The card 1 includes a base material 11, a laser coloring layer 15, an upper transparent layer 21, a lower transparent layer 22, an embedded member 31, and an optical element 40. The upper transparent layer 21, the laser coloring layer 15, the base material 11, and the lower transparent layer 22 are laminated in this order from the upper side Z2 toward the lower side Z1. These members can be formed of a resin sheet material such as polycarbonate (PC), polyethylene terephthalate (PET), amorphous PET copolymer (PET-G), polyvinyl chloride (PVC) or the like. The combination of the resin sheet materials is not limited. For example, the embedded member 31 may be formed of PET and the other layers may be formed of PC.

The base material 11 constitutes the base material of the card 1. The base material 11 may be a multilayer. The color of the base material 11 is white. The base material 11 includes an upper printed layer 11a and a lower printed layer 11b. The upper printed layer 11a and the lower printed layer 11b are respectively provided on the upper surface and the lower surface of the base material 11. In the upper printed layer 11a, common information, that is, information common to card owners is printed. The common information is, for example, text information such as "ID CARD" and "OX Company", or a pattern (not illustrated) such as ground pattern. The upper printed layer 11a can be formed by, for example, offset printing. Similarly, the common information is also printed in the lower printed layer 11b. The information in the upper printed layer 11a is visible through the laser coloring layer 15 and the upper transparent layer 21. The information in the lower printed layer 11b is visible through the lower transparent layer 22.

In addition, the base material 11 is an accommodating layer that accommodates the embedded member 31. That is, the base material 11 includes an accommodating portion 13. The area of the accommodating portion 13, that is, the installation range of the embedded member 31 is entirely formed by a layer which is transparent in the thickness direction Z. Therefore, when viewed from the upper side Z2, the area of the accommodating portion 13 is a transparent window 3. The accommodating portion 13 is a hole that accommodates the embedded member 31. Although the shape of the accommodating portion 13 as viewed from the upper side Z2 is quadrangular, the shape is not limited thereto and may be, for example, circular. The inner surface of the accommodating portion 13 is a reflection wall 13a (reflection portion) that reflects light toward the inside of the embedded member 31. The reflection wall 13a has the color (that is, white) of the base material 11, and the embedded member 31 is transparent. Therefore, the light reflected at the reflection wall 13a, which is the interface between the base material 11 and the embedded member 31, is reflected toward the inside of the embedded member 31 and then travels to the inside of the embedded member 31. Details of the travel of the light will be described later. In a state viewed from the upper side Z2, the reflection wall 13a is positioned outside a diffraction grating 52a (described later).

The laser coloring layer 15 is a layer having light-transmitting properties. The laser coloring layer 15 contains a color developer. Therefore, the range of the laser coloring layer 15 irradiated with laser light generates heat and develops in black, whereby laser marking is achieved. In the embodiment, the above color development is also referred to as "laser print, laser printing", or the like. The material of the laser coloring layer 15 may not contain a color developer as long as the laser coloring layer 15 develops color by being irradiated with laser light. The developed color may be other than black. In the laser coloring layer 15, individual information of the owner of the card is printed. In the example of Fig. 1, the individual information is the name "AAA BBB" of the card owner. The information laser-printed in the laser coloring layer 15 is visible through the upper transparent layer 21.

The upper transparent layer 21 is a layer having light-transmitting properties. The upper transparent layer 21 is a layer that protects the laser coloring layer 15 and the like. The lower transparent layer 22 is a layer similar to the upper transparent layer 21, has light-transmitting properties, and is a layer that protects the base material 11 and the like. The lower surface and the upper surface of the upper transparent layer 21 and the lower surface and the upper surface of the lower transparent layer 22 may be provided with a printed layer as necessary. In this case, these printed layers are provided outside the installation range of the embedded member 31 in a state viewed from the upper side Z2. This is to prevent the light incident on the embedded member 31 from being disturbed. However, these printed layers may be provided within the installation range of the embedded member 31 as long as printed layers transmit light corresponding to the diffraction grating 52a (described later) of a diffraction grating forming layer 52. For example, in a case where the diffraction grating 52a diffracts the wavelength for green, these printed layers may be provided within the installation range of the embedded member 31 as long as the printed layers transmit the wavelength for green.

The embedded member 31 is a transparent member and has light-transmitting properties. The embedded member 31 is formed of a single layer of a resin sheet material similar to the upper transparent layer 21 or the like, or a plurality of these layers. The external shape (length in each of the left-right direction X, the longitudinal direction Y, and the thickness direction Z) of the embedded member 31 has a size that just fits in the accommodating portion 13. Accordingly, the embedded member 31 is embedded in the resin layers (the base material 11, the laser coloring layer 15, and the lower transparent layer 22) forming the card 1. However, a form in which a slight gap is provided between the embedded member 31 and the reflection wall 13a of the accommodating portion 13 may be adopted. This is because, even in this form, the reflection wall 13a can reflect light toward the inside the embedded member 31.

In a case where the embedded member 31 and the lower transparent layer 22 are made of materials that are hard to be thermally welded or the like, a heat seal layer (HS layer) may be provided on the lower surface of the embedded member 31. Similarly, a HS layer may be provided on the upper surface of the embedded member 31 to adhere the embedded member 31 and the laser coloring layer 15 to each other.

The optical element 40 is a layer optically functioning by a hologram and diffraction. In a state viewed from the upper side Z2, the external shape of the optical element 40 and the external shape of the embedded member 31 are the same. The external shapes of the two are not limited thereto and may be different from each other. As illustrated in Fig. 2, the optical element 40 includes a hologram layer 41, a diffraction grating layer 50, and HS layers 61 and 62. These layers are transparent layers and the entire optical element 40 is also transparent. The HS layer 61, the hologram layer 41, the diffraction grating layer 50, and the HS layer 62 are laminated in this order from the upper side Z2 toward the lower side Z1.

The hologram layer 41 is a transparent hologram layer. Examples of types of holograms include a Lippmann hologram and an embossed hologram. In particular, from the viewpoint of stereoscopic image expression of the hologram image 41b and security, a Lippmann hologram is suitable. The hologram image 41b is an image of a cylinder. In a state viewed from the upper side Z2, the hologram image 41b is located in the accommodating portion 13 (see Fig. 1A).

In the embodiment, the hologram image 41b is set to reflect light toward the front surface when the incident angle of the light is 45°. Therefore, an observer can observe the hologram image 41b by causing light such as an indoor lighting 4 to be incident on the window 3 at an incident angle of 45° in a state in which the card 1 is observed from the upper side Z2. In the embodiment, the angle between the thickness direction Z and the observation direction of the hologram image 41b is also referred to as an observation angle θ41b. In the embodiment, the observation angle θ41b has a width of about 10°. Therefore, the observer can observe the hologram image 41b within an observation range at an angle of about 10° from the front surface of the hologram image 41b.

The diffraction grating layer 50 includes a diffraction grating base material 51, the diffraction grating forming layer 52, and a high refractive index layer 53. The diffraction grating base material 51, the diffraction grating forming layer 52, and the high refractive index layer 53 are overlapped in this order from the upper side Z2 toward the lower side Z1. The diffraction grating base material 51 is a base material for forming the diffraction grating 52a. The diffraction grating base material 51 is formed of a sheet material similar to the upper transparent layer 21 and the like. A transparent HS layer or the like may be provided between the diffraction grating base material 51 and the hologram layer 41 in order to adhere the diffraction grating base material 51 and the hologram layer 41 to each other.

The diffraction grating forming layer 52 is a layer in which the diffraction grating 52a is formed. The diffraction grating 52a is formed by forming the lower surface of the diffraction grating forming layer 52 in an uneven shape.

The diffraction grating 52a causes light (also referred to as "arrival light") that has arrived at the diffraction grating 52a through a light guide layer (described later) to exit toward the diffraction grating base material 51. The diffraction grating 52a causes, in the arrival light, light having an incident angle θ52a from the diffraction grating 52a to the high refractive index layer 53 and a specific wavelength to exit. In the embodiment, the incident angle θ52a is set to 45°. The incident angle θ and the wavelength may have specific ranges. The wavelength of the exiting light varies depending on the period of the recesses and protrusions of the diffraction grating 52a. Accordingly, the diffraction grating 52a can cause light having a specific color (for example, green) to exit.

As described above, the diffraction grating 52a has an optical function of causing, in arrival light L54 and L55, light having a specific incident angle θ and a specific wavelength to exit. In the embodiment, as an example, an example in which light having an incident angle θ of 45° with respect to the high refractive index layer 53 is diffracted so as to exit immediately toward the upper side Z2, that is, at an exit angle of 0° is described (see Fig. 2). Hereinafter, the diffracted light is also referred to as diffracted light.

The diffraction grating 52a can be formed, for example, by preparing a plate precursor having a periodic structure and shaping the plate precursor in the diffraction grating forming layer 52. As the material of the diffraction grating forming layer 52, a resin material that has been used in an embossed hologram or the like, for example, a cured product of a curable resin such as a resin, an ultraviolet curable resin, or an ionizing radiation curable resin, a thermoplastic resin, and the like can be used.

In a state viewed from the upper side Z2, the shape (hereinafter, also referred to as "grating shape") of the installation range of the diffraction grating 52a is a star shape. The grating shape 52b is located inside the region where the accommodating portion 13 is provided. In addition, the grating shape 52b is smaller than the external shape of the hologram image 41b, is located in the hologram image 41b, and overlaps the hologram image 41b. That is, the hologram image 41b covers the grating shape 52b. In addition, the hologram image 41b and shape 52b are not limited thereto and may not be overlapped.

The high refractive index layer 53 is a thin film covering the lower surface of the diffraction grating forming layer 52. The high refractive index layer 53 is disposed immediately under the diffraction grating forming layer 52 and is thus in direct contact with the lower surface of the diffraction grating forming layer 52. The refractive index of the high refractive index layer 53 is larger than the refractive indexes of the other layers (the diffraction grating forming layer 52 and the like. The high refractive index layer 53 can be formed, for example, by forming a material such as a metal such as Mg, Ti, Cr, Fe, Co, Ni, Cu, Zn, Ga, Ge, Se, Rb, Pd, Ag, Cd, In, Sn, Sb, Te, Au, Pb, or Bi, an oxide of the metal, or a sulfide of the metal such as ZnS on the diffraction grating forming layer 52 by a vacuum deposition method. As the materials of the diffraction grating forming layer 52 and the high refractive index layer 53, those having a difference in refractive index between the two so as to cause the diffraction grating 52a to sufficiently function may be appropriately selected.

The HS layers 61 and 62 are formed of a thermoplastic adhesive (polyester resin or the like) or the like. The HS layer 61 adheres the upper transparent layer 21 and the hologram layer 41 to each other. The HS layer 62 adheres of the high refractive index layer 53 and the lower transparent layer 22 to each other.

With the layer configuration, in the region of the window 3, the upper transparent layer 21, the HS layer 61, the hologram layer 41, the diffraction grating base material 51, the diffraction grating forming layer 52, the high refractive index layer 53, the HS layer 62, the laser coloring layer 15, the embedded member 31, and the lower transparent layer 22 are arranged in this order.

### [Observation Aspect of Grating Shape 52b and Hologram Image 41b]

An observation aspect of the grating shape 52b and hologram image 41b in a state in which the card 1 is viewed from the upper side Z2 will be described. In the observation aspect described below, a prototype was prepared and the prototype was actually checked.

### [Normal Observation]

As illustrated in Fig. 2, normal observation refers to a state in which the observer observes the card 1 from the upper surface and light L41 from the lighting 4, which is a light source, is incident on the card 1 at an incident angle of 45° (an angle corresponding to the hologram image 41b). The lighting 4 is, for example, an indoor fluorescent lamp or a light bulb. The light L41 is white light, and the light intensity thereof is, for example, at a general indoor brightness.

### (Diffraction Grating 52a in Normal Observation)

In normal observation, the intensity of light is low, diffracted light at an intensity at which the grating shape 52b is visually recognized is not generated. In a case where the incident angle is small, the embedded member 31 and the like cannot sufficiently function as a light guide layer as described later. Therefore, the grating shape 52b cannot be visually recognized.

In addition, in normal observation, there may be cases where, even if the diffraction grating 52a does not function sufficiently, the grating shape 52b is visually recognizable as a thin shadow. This is because, even in normal observation, a slight difference between the region where the diffraction grating 52a is formed and the other regions in paths through which light passes, transmittance, and the like due to the presence or absence of an uneven shape is a factor. In the embodiment, the hologram image 41b is larger than the grating shape 52b which is the shape of the installation range of the diffraction grating 52a. Therefore, the hologram image 41b covers the grating shape 52b and light is less likely to directly hit the diffraction grating 52a, so that it is difficult to visually recognize the grating shape 52b as a thin shadow. Therefore, the hologram image 41b can hide the diffraction grating 52a.

### (Hologram Image 41b in Normal Observation)

The light L41 incident on the upper transparent layer 21 from the outside of the card 1 passes through the HS layer 61 and the hologram layer 41 of the optical element 40 and arrives at the hologram image 41b. The hologram image 41b reflects light L42 toward the upper side Z2 within the observation angle θ41b. As a result, the stereoscopic hologram image 41b is reproduced. The hologram layer 41 is one on which the stereoscopic hologram image 41b is recorded. Therefore, by changing the observation angle θ41b within a range of about 10°, the direction of the cylinder as the reproduced image of the hologram changes.

### [Intense Lighting Observation]

Intense lighting observation is a state in which light L51 that is more intense than in normal observation is incident on the transparent window 3 using a pen-shaped light 5 or the like. The light L51 is white light. In this case, by increasing the incident angle θ51, the intensity of the light arriving at the reflection wall 13a can be increased.

### (Diffraction Grating 52a in Intense Lighting Observation)

As illustrated in Fig. 2, the light L51 incident on the upper transparent layer 21 from the outside of the card 1 passes through the upper transparent layer 21, the optical element 40, and the laser coloring layer 15, further passes through the inside of the embedded member 31, and arrives at the reflection wall 13a. The light L51 arriving at the reflection wall 13a is irregularly reflected at the reflection wall 13a. Since the reflection wall 13a is white, there is little light absorbed by the reflection wall 13a. Therefore, most of the light L51 arriving at the reflection wall 13a is reflected at the reflection wall 13a and travels to the inside of the embedded member 31. The light reflected at the reflection wall 13a travels, for example, as follows.

(1) Light L52 which is a portion of the irregularly reflected light passes through the embedded member 31 and the lower transparent layer 22, and is then reflected at an interface 22a between the lower transparent layer 22 and the outside air. Thereafter, the light L52 passes through the lower transparent layer 22 and the embedded member 31 and arrives at the reflection wall 13a again. Also in this case, most of light L53 arriving at the reflection wall 13a is reflected at the reflection wall 13a. Thereafter, the light L54 reflected at the reflection wall 13a passes through the embedded member 31, the laser coloring layer 15, the HS layer 62, and the high refractive index layer 53, and is incident on the diffraction grating 52a as the arrival light.
(2) The light L55 which is another portion of the irregularly reflected light passes through the embedded member 31, the laser coloring layer 15, the HS layer 62, the high refractive index layer 53, and is incident on the diffraction grating 52a as the arrival light.

As described above, the light reflected at the reflection wall 13a is guided to inside of the laser coloring layer 15, the embedded member 31, the lower transparent layer 22, the high refractive index layer 53, the HS layer 62, and the like and arrives at the diffraction grating 52a as the arrival light L54 and L55. In practice, the travel of the light in these layers (that is, the laser coloring layer 15, the embedded member 31, the lower transparent layer 22, the high refractive index layer 53, and the HS layer 62, which are transparent layers positioned on the lower side Z1 below the diffraction grating forming layer 52 and are arranged on the side opposite to the side on which the hologram layer 41 is disposed) is complex. In the embodiment, regardless of which path the light reflected at the reflection wall 13a travels through these layers, these layers function as a light guide layer that guides the light to the diffraction grating 52a.

For example, the light arrives at the diffraction grating 52a by being repeatedly reflected at the reflection wall 13a many times. In addition, the light is repeatedly reflected at each interface. The difference in refractive index between the high refractive index layer 53 and the diffraction grating forming layer 52 is large. Similarly, the difference in refractive index between the lower transparent layer 22 and the outside air is large. Therefore, the condition of total reflection tends to be established at the interface 53a between the high refractive index layer 53 and the diffraction grating forming layer 52, and the interface 22a between the lower transparent layer 22 and the outside air.

In this manner, the light incident on the window 3 arrives at the diffraction grating 52a after being reflected at the reflection wall 13a at least once. In this case, since the reflection wall 13a is white, the reflection wall 13a can reflect more light.

(3) In the arrival light L54 and L55 arriving at the diffraction grating 52a, light having an incident angle θ42a of 45° is diffracted by the function of the diffraction grating 52a. For example, in a case where the arrival light L54 and L55 is white light and the diffraction grating 52a causes the wavelength for green to exit, the light having the wavelength for green in the arrival light L54 and L55 is diffracted. In this case, as described above, since the light intensity of the arrival light L54 and L55 is high, the light intensity of the diffracted light can also be increased.

In addition, since the diffraction grating forming layer 52 and the high refractive index layer 53 have the above-mentioned difference in refractive index, the diffraction grating 52a reliably exhibits its optical function. That is, unlike the embodiment, in a form in which the high refractive index layer 53 is not provided and the diffraction grating forming layer 52 and the HS layer 62 are in direct contact with each other, usually, a sufficiently large difference in refractive index between the diffraction grating forming layer 52 and the HS layer 62 cannot be obtained. The reason is that both are resin layers and have substantially the same refractive index. Therefore, this type of diffraction grating 52a cannot reliably exhibit the optical function.

(4) After being incident on the diffraction grating forming layer 52, the diffracted light passes through the hologram layer 41, the HS layer 61, and the upper transparent layer 21, and exits toward the outside of the card 1, that is, into the air as light L56. Here, since the hologram layer 41 is a transparent hologram, the light incident from the lower side Z1 passes through the upper side Z2. In addition, since the region outside the grating shape 52b of the diffraction grating 52a is transparent, the space on the lower side Z1 below the card 1 is observed through the region. Accordingly, the grating shape 52b can be visually recognized. In addition, since the light intensity of the diffracted light is high, the light L56 also increases in intensity. Therefore, the grating shape 52b glows brightly and can be clearly observed.

In the above description, the form in which the light is incident on the inside of the card 1 from the upper side Z2 has been described. However, a form in which the light is incident on the inside of the card 1 from the lower side Z1 may be adopted. Even in this form, the light that has passed through the lower transparent layer 22 arrives at the reflection wall 13a and travels in the same manner as in (1) to (4). Therefore, in this form, when the embedded member 31 is observed from the upper side Z2, the grating shape 52b can be clearly observed.

### (Hologram Image 41b in Intense Lighting Observation)

In the prototype, the hologram image 41b could not be visually recognized during the intense lighting observation. For example, the following reasons are conceivable.
· Since the incident angle is large, the hologram image 41b cannot reflect the light within the observation angle θ41b.
· The intensity of light traveling toward the upper side Z2 from the lower side Z1 of the hologram layer 41 increases due to the function of the reflection wall 13a and the light guide layer. Therefore, it becomes difficult to visually recognize the hologram image 41b. Depending on incident conditions of light, light may be reflected by the high refractive index layer 53. In this case, since the reflected light is scattered, the hologram image 41b is not seen or is hardly seen, and the grating shape 52b can be visually recognizable.

As described above, in the normal observation and the intense lighting observation, the grating shape 52b and the hologram image 41b are observed as follows. In the normal observation, the grating shape 52b cannot be visually recognized, whereas the hologram image 41b can be visually recognized. Contrary to this, in the intense lighting observation, the grating shape 52b can be visually recognized, whereas the hologram image 41b cannot be visually recognized.

Thus, the card 1 can switch between visually recognizable images or the like depending on the lighting state. In addition, the grating shape 52b cannot be visually recognized in a normal lighting state, and can be visually recognized only by a special observation method called intense lighting observation. Therefore, it is difficult for a person other than the card issuer or the like to recognize the existence of the diffraction grating 52a, so that it is difficult to forge the card. Therefore, the card 1 has high security. In addition, since the card 1 can be checked by switching between the hologram image 41b and the grating shape 52b by changing and observing the lighting state, authenticity can be determined. Furthermore, the light L53 after being diffracted by the diffraction grating 52a exits within the range of the observation angle θ41b of the hologram image 41b. Therefore, the observer can check the grating shape 52b by switching to the intense lighting observation with the pen-shaped light 5 or the like while maintaining the posture in which the hologram image 41b is observed in the normal lighting state. Accordingly, workability for authenticity determination is good.

### [Manufacturing Method]

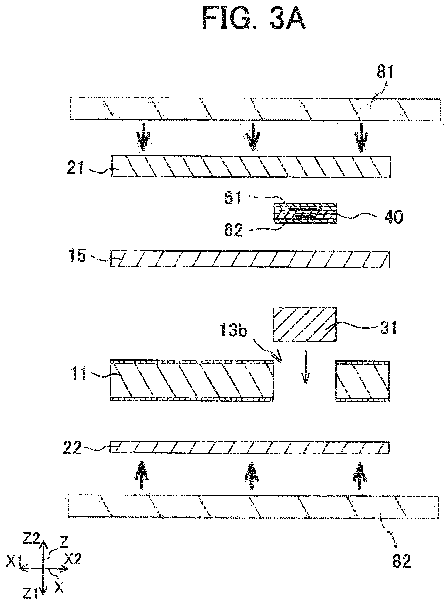

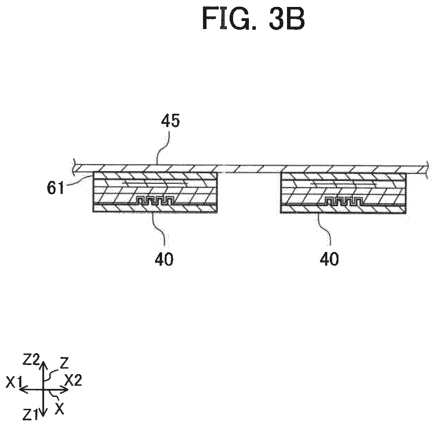

Figs. 3A and 3B are sectional views illustrating a method of manufacturing the card 1 of the first embodiment. Fig. 3A is a view illustrating a hot pressing process. Fig. 3B is a view illustrating a form in which a plurality of the optical elements 40 are held by a carrier film 45. As illustrated in Fig. 3A, the card 1 can be manufactured by hot pressing. The card 1 can be manufactured according to the following steps. The following procedure may be changed as appropriate. As a preliminary step of the hot pressing of Fig. 3A, the optical element 40, the embedded member 31, and the base material 11 are manufactured as follows. The base material 11 is provided with a hole 13b for forming the accommodating portion 13 by press working or the like.

The diffraction grating layer 50 is manufactured by laminating the diffraction grating forming layer 52 and the high refractive index layer 53 in this order on the lower surface of the diffraction grating base material 51. Thereafter, the hologram layer 41 and the diffraction grating layer 50 are adhered to each other by an HS layer or the like. Thereafter, the HS layers 61 and 62 are respectively provided on the upper surface of the hologram layer 41 and the lower surface of the diffraction grating layer 50. The optical elements 40 may be formed by manufacturing a single sheet in which a plurality of optical element layers are arranged (so-called multi-faced) in the surface direction (XY plane direction) and then dividing the single sheet into individual pieces by pressing or the like.

As illustrated in Fig. 3B, the plurality of individual optical elements 40 may be held by the carrier film 45 such as PET. For the adhesion between the optical elements 40 and the carrier film 45, for example, an adhesive layer having a weak holding force may be provided on the carrier film 45, or the adhesion of the HS layer 61 may be used. In this case, as the HS layer 61, one having weak adhesiveness even at room temperature may be selected.

Subsequently, as illustrated in Fig. 3A, hot pressing is performed. That is, the following processing is performed.
(1) The embedded member 31 is inserted into the hole 13b of the base material 11.
(2) In a state in which the embedded member 31 inserted into the hole 13b, the upper transparent layer 21, the optical element 40, the laser coloring layer 15, the base material 11, and the lower transparent layer 22 are overlapped in order. In order to suppress positional deviation during the lamination of the optical element 40, the optical element 40 may be adhered to the laser coloring layer 15 by the HS layer 62 in advance. In this case, for example, the temperature at which the HS layer 62 reveals adhesiveness may be lower than the temperature at which the HS layer 61 reveals adhesiveness. By selecting the HS layers 61 and 62 having such properties, the adhesiveness of only the HS layer 62 can be revealed at a low temperature and the optical element 40 and the laser coloring layer 15 can be adhered to each other. Unlike the above, the optical element 40 may be adhered to the upper transparent layer 21 by the HS layer 61 in advance. In this case, the properties of the HS layers 61 and 62 may be reversed from the above.
(3) The laminate overlapped as in (2) is sandwiched between hot press plates 81 and 82 and hot pressed. Accordingly, the layers are thermally welded to each other. In this case, the upper transparent layer 21 and the hologram layer 41 are adhered to each other with the HS layer 61 interposed therebetween. In addition, the laser coloring layer 15 and the high refractive index layer 53 are to each other with the HS layer 62 interposed therebetween.

In a case where the material of the embedded member 31 and the material of the base material 11 are easily thermally welded to each other, the outer wall of the embedded member 31 and the reflection wall 13a of the accommodating portion 13 are thermally welded to each other. On the other hand, in a case where the material of the embedded member 31 and the material of the base material 11 are not thermally welded to each other, the outer wall of the embedded member 31 and the reflection wall 13a of the accommodating portion 13 are not thermally welded to each other. However, as described above, the reflection wall 13a may exhibit a function of guiding light to the inside of the embedded member 31 by reflecting light. Therefore, the outer wall of the embedded member 31 and the reflection wall 13a of the accommodating portion 13 may be thermally welded or may not be thermally welded to each other. Furthermore, these may be in close contact with each other, or may have a gap therebetween.

Also in the steps (1) to (3), the cards 1 in which members of a plurality of the cards 1 are arranged in the surface direction may be manufactured and then divided into individual pieces, but a detailed description will be omitted. (4) When the card is issued, variable information is laser-printed by performing laser irradiation.

As described above, the card 1 of this embodiment can be switched between the hologram image 41b and the grating shape 52b depending on the lighting state. Accordingly, authenticity can be determined. Furthermore, by providing the hologram and the diffraction grating in the card 1, the security thereof can be improved.

### (Second Embodiment)

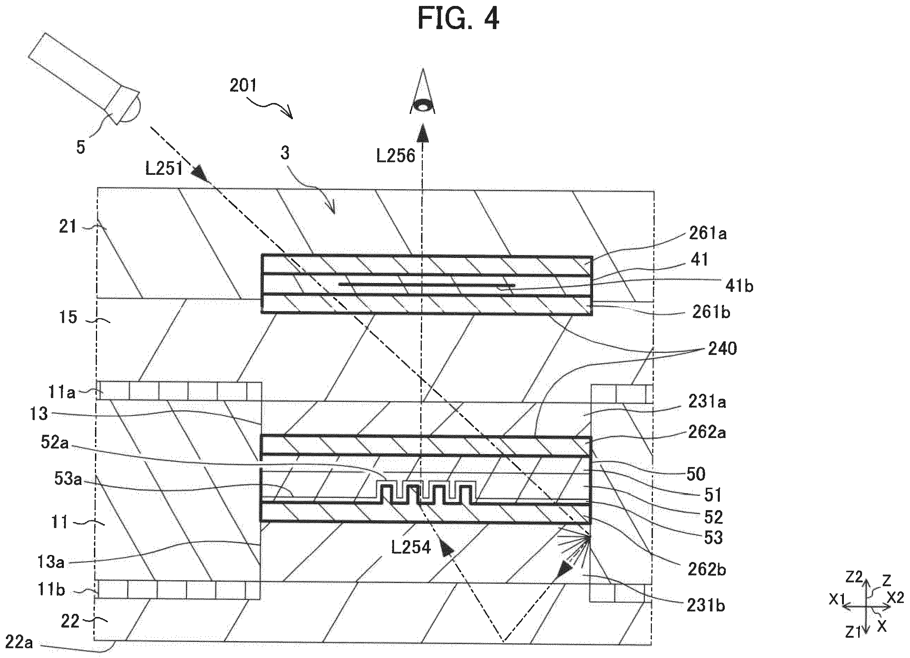

Next, a second embodiment of the present invention will be described. In the following description and the drawings, like elements which have the same function as those of the first embodiment are denoted by like reference numerals or the ends (last two digits) thereof are denoted by like reference numerals as appropriate, and an overlapping description will be omitted as appropriate. Fig. 4 is a sectional view (view corresponding to Fig. 2) illustrating a card 201 of the second embodiment. In the optical element 240 of this embodiment, the hologram layer 41 and the diffraction grating layer 50 are separated from each other. The layer configurations of the hologram layer 41 and the diffraction grating layer 50 are the same as those of the first embodiment. The laser coloring layer 15 and an embedded member 231a are disposed between the hologram layer 41 and the diffraction grating layer 50. In the embodiment, as described above, the form in which the hologram layer and the diffraction grating layer are separated from each other is also included in the concept of the optical element.

The upper and lower surfaces of the hologram layer 41 are provided with transparent HS layers 261a and 261b. The HS layer 261a adheres the upper transparent layer and the hologram layer 41 to each other. The HS layer 261b adheres the hologram layer 41 and the laser coloring layer 15 to each other.

The diffraction grating layer 50 is accommodated in the accommodating portion 13. Therefore, in the accommodating portion 13, the embedded member 231a, the diffraction grating layer 50, and an embedded member 231b are arranged from the upper side Z2 toward the lower side Z1. The embedded members 231a and 231b are members similar to the embedded member of the first embodiment and are transparent. The upper and lower surfaces of the diffraction grating layer 50 are provided with transparent HS layers 262a and 262b. The HS layer 262a adheres the embedded member 231a and the diffraction grating base material 51 to each other. The HS layer 262b adheres the high refractive index layer 53 and the embedded member 231b to each other.

Although not illustrated, in normal observation, as in the first embodiment, the hologram image 41b can be visually recognized, whereas the grating shape cannot be visually recognized. In the intense lighting observation, as in the first embodiment, the hologram image 41b cannot be visually recognized. On the other hand, as shown in Fig. 4, light L251 such as the pen-shaped light 5 passes through the upper transparent layer 21, the hologram layer 41, the laser coloring layer 15, the embedded member 231a, the diffraction grating layer 50, the embedded member 231b, and arrives at the reflection wall 13a. As in the first embodiment, the light L251 arriving at the reflection wall 13a is irregularly reflected, then passes through the light guide layer, and is incident on the diffraction grating 52a as arrival light L254. In this case, the lower transparent layer 22, the embedded member 231b, the HS layer 262b, and the like mainly function as the light guide layer. In the light guide layer, the travel of the light is complex as in the first embodiment. In addition, since the diffraction grating layer 50 is accommodated in the accommodating portion 13, the entire circumference of the diffraction grating 52a is surrounded by the reflection wall 13a. Accordingly, the intensity of light arriving at the diffraction grating 52a can be increased.

Thereafter, the arrival light L254 is diffracted by the function of the diffraction grating 52a, then passes through the diffraction grating base material 51, the embedded member 231a, the laser coloring layer 15, the hologram layer 41, the upper transparent layer 21, and the like, and exits as light L256. Accordingly, in the intense lighting observation, the grating shape can be visually recognized.

In a case where the card 201 of this embodiment is manufactured, after inserting the embedded member 231a, the diffraction grating layer 50, and the embedded member 231b into the accommodating portion 13, the layers may be laminated and hot pressed. The embedded member 231a, the diffraction grating layer 50, and the embedded member 231b may be hot pressed into an assembly in which the layers are adhered to one another, before being inserted into the accommodating portion 13. Accordingly, the diffraction grating 52a is not exposed to the outside, and thus the diffraction grating 52a can be protected from being contaminated during handling (during storage, transporting, or the like) of a single component.

As described above, in the optical element 240 of the card 201 of this embodiment, even in a form in which the hologram layer 41 and the diffraction grating layer 50 are separated from each other, as in the first embodiment, the hologram image 41b and the grating shape can be observed.

### (Third Embodiment)

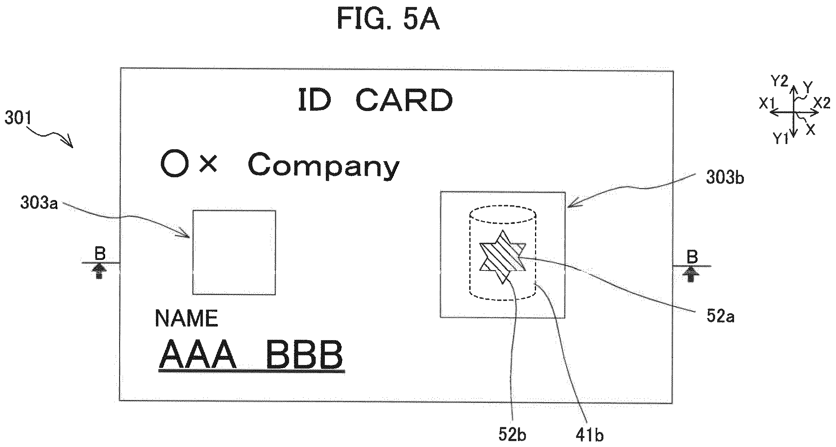

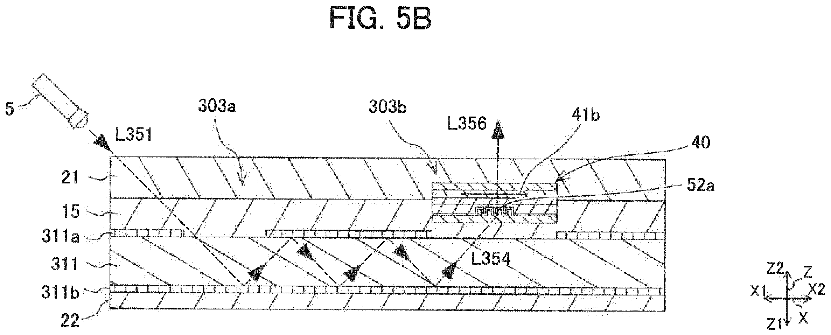

Figs. 5A and 5B are views (view corresponding to Figs. 1A and 1B) illustrating a card 301 of a third embodiment. Fig. 5A is a view of the upper surface of the card 301 as viewed from the normal direction. Fig. 5B is a sectional view taken along line B-B of Fig. 1A. In the card 301, the optical element 40 is the same as that in the first embodiment, and the configuration of the base material is different from that in the first embodiment. The base material of the card 301 is a transparent base material 311. In addition, the card 301 does not have an embedded member. Therefore, the transparent base material 311 does not have an accommodating hole and is disposed on the entire surface between the laser coloring layer 15 and the lower transparent layer 22.

The upper and lower surfaces of the transparent base material 311 are respectively provided with an upper printed layer 311a and a lower printed layer 311b. The upper printed layer 311a is a white solid printed layer. However, a partial range and a range in which the optical element 40 is disposed in the upper printed layer 311a are removed. The ranges respectively form windows 303a and 303b. The window 303a has a function as an introduction portion through which light is introduced into the transparent base material (light guide layer) 311. In addition, the window 303b has a function as an exit portion that causes the light introduced through the window 303a and is guided by the transparent base material (light guide layer) 311 to exit toward the diffraction grating 52a. The lower printed layer 311b is a solid printed layer in which the entire surface is white. Here, the thickness of each layer in the third embodiment will be described. The thickness of the upper transparent layer 21 is desirably 5 µm or more and 500 µm or less, and is set to 100 µm in this embodiment. The thickness of the laser coloring layer 15 is desirably 5 µm or more and 500 µm or less, and is set to 100 µm in this embodiment. The thickness of the upper printed layer 311a is desirably 5 µm or more and 500 µm or less, and is set to 100 µm in this embodiment. The thickness of the transparent base material 311 is desirably 5 µm or more and 1000 µm or less, and in this embodiment, the thickness is set to 200 µm. The thickness of the lower printed layer 311b is desirably 5 µm or more and 500 µm or less, and is set to 100 µm in this embodiment. The thickness of the lower transparent layer 22 is desirably 5 µm or more and 500 µm or less, and is set to 100 µm in this embodiment. In addition, the thickness of the optical element (including the light guide film and the hologram) 40 is desirably 10 µm or more and 1000 µm or less, and is set to 50 µm to 100 µm in this embodiment.

In the normal observation, the grating shape 52b and the hologram image 41b are observed as in the first embodiment. As illustrated in Fig. 5B, in the intense lighting observation, light L351 such as the pen-shaped light 5 is caused to be incident on the transparent window 303a. The light L351 is repeatedly reflected at the interface between the transparent base material 311 and the lower transparent layer 22 and the interface between the transparent base material 311 and the laser coloring layer 15, and is guided toward the window 303b side. As described above, the transparent base material 311 functions as a light guide layer. In addition, since the upper printed layer 311a and the lower printed layer 311b are white layers, a large portion of light is guided toward the window 303b side.

Light L354 arriving at the window 303b passes through the laser coloring layer 15 and arrives at the optical element 40. As in the first embodiment, the light L354 is diffracted by the diffraction grating 52a and then exits as light L356. Therefore, in the intense lighting observation, the grating shape 52b can be visually recognized. On the other hand, in the intense lighting observation, the hologram image 41b cannot be visually recognized as in the first embodiment. Furthermore, in the card 301 of this embodiment, the transparent base material 311 is configured to be larger than the diffraction grating 52a, and the window 303a and the window 303b are arranged apart from each other. Therefore, the position at which light is introduced and the position at which light exits (the position at which the diffraction grating 52a is disposed) are separated from each other, and for those who do not know usage, it is difficult to find the usage or to understand the structure. Therefore, forgery is difficult and security can be enhanced.

As described above, in the card 301 of this embodiment, the grating shape 52b can be visually recognized by guiding the light incident on the window 303a to the window 303b through the inside of the card. The configuration in which the incident light arrives at the diffraction grating 52a is not limited to this embodiment and the above-described embodiments. In this embodiment, an example in which the upper printed layer 311a and the lower printed layer 311b are provided as white layers is described, but the white layers are not limited thereto. For example, white resin sheets or the like may be provided.

### (Modification Embodiments)

(1) In the embodiments, an example in which the color of the incident light and the color of the reflection wall (the color of the base material) are both white is described, but the colors are not limited thereto. The combination of the colors can be selected as appropriate according to the function of the diffraction grating. For example, in a case where the diffraction grating functions at the wavelength for green, the combination of the colors may be set so that the arrival light includes the wavelength for green. Alternatively, the incident light may be white and the reflection wall may be green. In this case, the arrival light at the wavelength for green arrives at the diffraction grating. In addition, in the arrival light, light having an incident angle corresponding to the function of the diffraction grating can be diffracted and exit.

Furthermore, in the embodiments, an example in which the color of the base material is white, that is, the color corresponding to the function of the diffraction grating is described, but the color is not limited thereto. The reflection wall may be configured to reflect light regardless of the color of the base material. For example, the base material may be transparent, and the reflection wall may be colored to a color corresponding to the function of the diffraction grating by coating or the like.

(2) In the embodiments, an example in which the diffraction grating base material 51, the diffraction grating forming layer 52, and the high refractive index layer 53 are arranged from the upper side toward the lower side is described, but the arrangement is not limited thereto. A form in which the high refractive index layer 53, the diffraction grating forming layer 52, and the diffraction grating base material 51 are arranged from the upper side toward the lower side may be adopted. In this form, the diffraction grating base material 51 functions as the light guide layer that guides light to the diffraction grating. In a case where the high refractive index layer 53 and the diffraction grating forming layer 52 are members that can be transferred to other layers, a form in which the diffraction grating base material 51 is removed may be adopted. That is, the diffraction grating layer 50 may not be provided with a base material such as the diffraction grating base material 51, and may be a foil or the like having the high refractive index layer 53 and the diffraction grating forming layer 52.

(3) In the embodiment, an example in which intense lighting observation is performed using the pen-shaped light 5 is described. The intense lighting observation is not limited thereto, and for example, a light source attached to a portable device such as a smartphone may be used, or a light source device dedicated to authenticity determination may be used. As the type of the light source, for example, a light emitting diode (LED) light source may be used, an organic light emitting diode (OLED) may be used, or a laser light source may be used. Furthermore, the light emitted by the light source is not limited to white light, and may be light of a specific color such as green.

(4) In the embodiment, an example in which the laminate constitutes the card is described. The laminate is not limited thereto, and for example, the laminate may constitute at least one page of a booklet having a plurality of pages.

### EXPLANATION OF REFERENCE NUMERALS

1, 201, 301 CARD
3, 303a, 303b WINDOW
11 BASE MATERIAL
11a, 311a UPPER PRINTED LAYER
11b, 311b LOWER PRINTED LAYER
13 ACCOMMODATING PORTION
13a REFLECTION WALL
15 LASER COLORING LAYER
21 UPPER TRANSPARENT LAYER
22 LOWER TRANSPARENT LAYER
31, 231a, 231b EMBEDDED MEMBER
40, 240 OPTICAL ELEMENT
41 HOLOGRAM LAYER
41b HOLOGRAM IMAGE
50 DIFFRACTION GRATING LAYER
51 DIFFRACTION GRATING BASE MATERIAL
52 DIFFRACTION GRATING FORMING LAYER
52a DIFFRACTION GRATING
52b GRATING SHAPE
53 HIGH REFRACTIVE INDEX LAYER
61, 62, 261a, 261b, 262a, 262b HS LAYER
311 TRANSPARENT BASE MATERIAL

## Claims

1. An optical element comprising:
a hologram layer (41) configured to reproduce a hologram image (41b);
a diffraction grating layer (50) laminated on one surface side of the hologram layer, and
a light guide layer comprising a single layer or a plurality of layers (311, 31) that guides light to the diffraction grating on a side which is one surface side of the diffraction grating layer (50) and is opposite to a side on which the hologram layer (41) is disposed,
wherein the diffraction grating layer includes a diffraction grating (52a) having recesses and protrusions in a direction opposite to a direction in which the hologram layer (41) is disposed,
said optical element further comprising:
a high refractive index layer (53) which is in direct contact with a surface of the diffraction grating (52a) opposite to a side on which the hologram layer (41) is disposed and has a higher refractive index than a diffraction grating forming layer (52) forming the diffraction grating,
wherein the optical element is configured such that the hologram image (41b) is visually recognizable in white light incident on the optical element under normal observation and a shape (52b) formed by the diffraction grating (52a) is visually recognizable in intense lighting observation with observation light having an intensity higher than the intensity of the white light.

2. The optical element according to claim 1,
wherein the light guide layer when the light guide layer is a single layer, said light guide layer (311) is configured as a region larger than the diffraction grating (52a), and
the light guide layer includes
an introduction portion (303a) through which light is introduced into the light guide layer, and
an exit portion (303b) that causes the light introduced through the introduction portion and guided by the light guide layer to exit toward the diffraction grating.

3. The optical element according to claim 2, wherein
the light guide layer (311) is provided on a side which is one surface side of the diffraction grating layer (50) and is opposite to a side on which the hologram layer (41) is disposed; and
the introduction portion (303a) is a window that is not printed.

4. The optical element according to claim 3, further comprising:
a printed layer (311a) formed to cover at least a portion of the light guide layer (311),
wherein the printed layer is configured as a removed portion where ink is not provided, at positions corresponding to the introduction portion (303a) and the exit portion (303b).

5. The optical element according to any one of claims 1 to 4,
wherein the hologram image (41b) reproduced by the hologram layer (41) is larger than a grating shape (52b) when viewed in a lamination direction and covers the grating shape (52b), wherein the grating shape (52b) is a shape of a range in which the diffraction grating (52a) is installed.

6. The optical element according to any one of claims 1 to 5,
wherein the diffraction grating (52a) causes diffracted light to exit to an inside of an observation range of the hologram image (41b) reproduced by the hologram layer (41).

7. A laminate comprising:
the optical element (40, 240) according to any one of claims 1 to 6.

8. The laminate comprising the optical element according to claim 7, further comprising:
a reflection portion (13a) which is located outside the diffraction grating (52a) when viewed in the normal observation .

9. The laminate according to claim 8, further comprising:
a transparent embedded member (31, 231b) embedded in a resin layer forming the laminate,
wherein the optical element (40, 240) is disposed above the embedded member, and
the reflection portion (13a) is a wall portion surrounding the embedded member and being adapted to reflect light toward a surface of the diffraction grating layer opposite to the direction of the hologram layer (41).

10. The laminate according to any one of claims 7 to 9,
wherein the laminate is a card (1, 201, 301).

11. A booklet comprising:
the laminate according to any one of claims 7 to 9.

## Patentansprüche

1. Optisches Element umfassend:
eine Hologrammschicht (41), die konfiguriert ist, ein Hologrammbild (41b) zu reproduzieren;
eine Beugungsgitterschicht (50), die auf eine Flächen- bzw. Oberflächenseite der Hologrammschicht laminiert ist, und
eine Lichtleiterschicht, die eine einzelne Schicht oder eine Mehrzahl von Schichten (311, 31) umfasst, die Licht zu dem Beugungsgitter auf einer Seite leitet, die eine Flächen- bzw. Oberflächenseite der Beugungsgitterschicht (50) ist und einer Seite gegenüberliegt bzw. entgegengesetzt ist, auf der die Hologrammschicht (41) angeordnet ist,
wobei die Beugungsgitterschicht ein Beugungsgitter (52a) mit Aussparungen und Vorsprüngen in einer Richtung gegenüberliegend bzw. entgegengesetzt zu einer Richtung beinhaltet, in welcher die Hologrammschicht (41) angeordnet ist, wobei das optische Element ferner umfasst:
eine Schicht (53) mit hohem Brechungsindex, die in direktem Kontakt mit einer Fläche bzw. Oberfläche des Beugungsgitters (52a) gegenüberliegend bzw. entgegengesetzt zu einer Seite ist, auf welcher die Hologrammschicht (41) angeordnet ist, und einen höheren Brechungsindex als eine Beugungsgitterbildungsschicht (52) aufweist, die das Beugungsgitter bildet,
wobei das optische Element so konfiguriert ist, dass das Hologrammbild (41b) in weißem Licht, das auf das optische Element einfällt, bei normaler Betrachtung visuell erkennbar ist, und eine durch das Beugungsgitter (52a) gebildete Form (52b) bei Betrachtung mit intensivem Licht, wobei Betrachtungslicht eine höhere Intensität als die Intensität des weißen Lichts aufweist, visuell erkennbar ist.

2. Optisches Element nach Anspruch 1,
wobei die Lichtleiterschicht, wenn die Lichtleiterschicht eine einzelne Schicht ist, die Lichtleiterschicht (311) als ein Bereich konfiguriert ist, der größer ist als das Beugungsgitter (52a), und
die Lichtleiterschicht beinhaltet:
einen Einbringungsabschnitt (303a), durch den Licht in die Lichtleiterschicht eingebracht wird, und
einen Austrittsabschnitt (303b), der das durch den Einbringungsabschnitt eingebrachte und durch die Lichtleiterschicht geleitete Licht veranlasst, zu dem Beugungsgitter hin auszutreten.

3. Optisches Element nach Anspruch 2, wobei
die Lichtleiterschicht (311) auf einer Seite bereitgestellt ist, die eine Flächen- bzw. Oberflächenseite der Beugungsgitterschicht (50) ist und einer Seite gegenüberliegt bzw. entgegengesetzt ist, auf der die Hologrammschicht (41) angeordnet ist; und
der Einbringungsabschnitt (303a) ein nicht bedrucktes Fenster ist.

4. Optisches Element nach Anspruch 3, ferner umfassend:
eine bedruckte Schicht (311a), die dahingehend gebildet ist, zumindest einen Abschnitt der Lichtleiterschicht (311) zu bedecken,
wobei die bedruckte Schicht als ein entfernter Abschnitt konfiguriert ist, an dem keine Tinte bereitgestellt ist, und zwar an Positionen, die dem Einbringungsabschnitt (303a) und dem Austrittsabschnitt (303b) entsprechen.

5. Optisches Element nach einem der Ansprüche 1 bis 4,
wobei das von der Hologrammschicht (41) reproduzierte Hologrammbild (41b) bei Betrachtung in einer Laminierungsrichtung größer als eine Gitterform (52b) ist und die Gitterform (52b) abdeckt, wobei die Gitterform (52b) eine Form eines Bereichs ist, in dem das Beugungsgitter (52a) installiert ist.

6. Optisches Element nach einem der Ansprüche 1 bis 5,
wobei das Beugungsgitter (52a) gebeugtes Licht veranlasst, zu einer Innenseite eines Beobachtungsbereichs des von der Hologrammschicht (41) reproduzierten Hologrammbildes (41b) auszutreten.

7. Laminat, umfassend:
das optische Element (40, 240) nach einem der Ansprüche 1 bis 6.

8. Laminat, umfassend das optische Element nach Anspruch 7, ferner umfassend:
einen Reflexionsabschnitt (13a), der sich bei Betrachtung mit der normalen Betrachtung außerhalb des Beugungsgitters (52a) befindet.

9. Laminat nach Anspruch 8, ferner umfassend:
ein transparentes, eingebettetes Glied (31, 231b), das in eine das Laminat bildende Harzschicht eingebettet ist,
wobei das optische Element (40, 240) über dem eingebetteten Glied angeordnet ist, und
der Reflexionsabschnitt (13a) ein das eingebettete Glied umgebender Wandabschnitt ist und angepasst ist, Licht auf eine Fläche bzw. Oberfläche der Beugungsgitterschicht entgegengesetzt zu der Richtung der Hologrammschicht (41) zu reflektieren.

10. Laminat nach einem der Ansprüche 7 bis 9,
wobei das Laminat eine Karte (1, 201, 301) ist.

11. Booklet, umfassend:
das Laminat nach einem der Ansprüche 7 bis 9.

## Revendications

1. Élément optique comprenant :
une couche d'hologramme (41) configurée pour reproduire une image d'hologramme (41b) ;
une couche de réseau de diffraction (50) stratifiée sur un côté de surface de la couche d'hologramme, et
une couche de guidage de lumière comprenant une couche unique ou une pluralité de couches (311, 31) qui guide la lumière vers le réseau de diffraction sur un côté qui est un côté de surface de la couche de réseau de diffraction (50) et est opposé à un côté sur lequel est disposée la couche d'hologramme (41),
dans lequel la couche de réseau de diffraction comporte un réseau de diffraction (52a) ayant des évidements et des protubérances dans une direction opposée à une direction dans laquelle est disposée la couche d'hologramme (41),
ledit élément optique comprenant en outre :
une couche à indice de réfraction élevé (53) qui est en contact direct avec une surface du réseau de diffraction (52a) opposée à un côté sur lequel est disposée la couche d'hologramme (41) et a un indice de réfraction plus élevé qu'une couche de formation de réseau de diffraction (52) formant le réseau de diffraction,
dans lequel l'élément optique est configuré de telle sorte que l'image d'hologramme (41b) est visuellement reconnaissable dans la lumière blanche incidente sur l'élément optique dans des conditions normales d'observation et qu'une forme (52b) formée par le réseau de diffraction (52a) est visuellement reconnaissable dans une observation sous éclairage intense avec une lumière d'observation ayant une intensité supérieure à l'intensité de la lumière blanche.

2. Élément optique selon la revendication 1,
dans lequel la couche de guidage de lumière lorsque la couche de guidage de lumière est une couche unique, ladite couche de guidage de lumière (311) est configurée en guise de région plus grande que le réseau de diffraction (52a), et
la couche de guidage de lumière comporte
une partie d'introduction (303a) à travers laquelle de la lumière est introduite dans la couche de guidage de lumière, et
une partie de sortie (303b) qui amène la lumière introduite à travers la partie d'introduction et guidée par la couche de guidage de lumière à sortir vers le réseau de diffraction.

3. Élément optique selon la revendication 2, dans lequel
la couche de guidage de lumière (311) est fournie sur un côté qui est un côté de surface de la couche de réseau de diffraction (50) et est opposé à un côté sur lequel est disposée la couche d'hologramme (41) ; et
la partie d'introduction (303a) est une fenêtre qui n'est pas imprimée.

4. Élément optique selon la revendication 3, comprenant en outre :
une couche imprimée (311a) formée pour couvrir au moins une partie de la couche de guidage de lumière (311),
dans lequel la couche imprimée est conçue en guise de partie retirée où l'encre n'est pas fournie, au niveau de positions correspondant à la partie d'introduction (303a) et à la partie de sortie (303b).

5. Élément optique selon l'une quelconque des revendications 1 à 4,
dans lequel l'image d'hologramme (41b) reproduite par la couche d'hologramme (41) est plus grande qu'une forme de réseau (52b) lorsqu'elle est vue dans une direction de stratification et recouvre la forme de réseau (52b), dans lequel la forme de réseau (52b) est une forme d'une plage dans laquelle est installé le réseau de diffraction (52a).

6. Élément optique selon l'une quelconque des revendications 1 à 5,
dans lequel le réseau de diffraction (52a) amène la lumière diffractée à sortir vers l'intérieur d'une plage d'observation de l'image hologramme (41b) reproduite par la couche d'hologramme (41).

7. Stratifié comprenant :
l'élément optique (40, 240) selon l'une quelconque des revendications 1 à 6.

8. Stratifié comprenant l'élément optique selon la revendication 7, comprenant en outre :
une partie de réflexion (13a) qui est située à l'extérieur du réseau de diffraction (52a) lorsqu'elle est vue dans l'observation normale.

9. Stratifié selon la revendication 8 comprenant en outre :
un élément inclus transparent (31, 231b) inclus dans une couche de résine formant le stratifié,
dans lequel l'élément optique (40, 240) est disposé au-dessus de l'élément inclus, et
la partie de réflexion (13a) est une partie paroi entourant l'élément inclus et étant conçue pour réfléchir la lumière vers une surface de la couche de réseau de diffraction opposée à la direction de la couche d'hologramme (41).

10. Stratifié selon l'une quelconque des revendications 7 à 9,
dans lequel le stratifié est une carte (1, 201, 301).

11. Livret comprenant :
le stratifié selon l'une quelconque des revendications 7 à 9.
